Europäisches Patentamt

European Patent Office

Office européen des brevets

(11) Veröffentlichungsnummer: **0 204 847 B2**

(12) **NEUE EUROPÄISCHE PATENTSCHRIFT**

④⑤ Veröffentlichungstag der neue Patentschrift:
**21.09.94**

(21) Anmeldenummer: **85104107.9**

(22) Anmeldetag: **04.04.85**

(51) Int. Cl.5: **B01D 53/14**

(54) Verfahren zur selektiven Absorption von Schwefelwasserstoff aus einem Schwefelwasserstoff und Kohlendioxyd enthaltenden Gas und Vorrichtung zum Durchführen des Verfahrens.

(30) Priorität: **22.02.85 CH 823/85**

(43) Veröffentlichungstag der Anmeldung:
**17.12.86 Patentblatt 86/51**

(45) Bekanntmachung des Hinweises auf die Patenterteilung:
**26.06.91 Patentblatt 91/26**

(45) Bekanntmachung des Hinweises auf die Entsheidung über den Einspruch:
**21.09.94 Patentblatt 94/38**

(84) Benannte Vertragsstaaten:
**DE FR GB IT**

(56) Entgegenhaltungen:
**EP-A- 0 070 920**
**CH-A- 617 357**
**US-A- 4 297 329**
**US-A- 4 483 834**

**Sulzer-Kolonnen für Absorptions- und Desorptionsprozesse, P. Bomio, TECHNISCHE RUNDSCHAU SULZER 2/1979, Seiten 62-68**

(73) Patentinhaber: **GEBRÜDER SULZER AKTIENGE-SELLSCHAFT**
**Zürcherstrasse 9**
**CH-8401 Winterthur (CH)**

(72) Erfinder: **Wynn, Nicholas Patrick**
**35 Wyland Avenue**
**Toronto Ontario (CA)**

EP 0 204 847 B2

**Beschreibung**

Die Erfindung betrifft ein Verfahren zur selektiven Absorption von Schwefelwasserstoff aus einem Schwefelwasserstoff und Kohlendioxyd enthaltenden Gas in einer Absorptionskolonne, in der das Gas mit einem eine wässrige Alkanolaminlösung enthaltenden Absorptionsmittel in Kontakt gebracht wird. Die Erfindung betrifft weiterhin eine Vorrichtung zum Durchführen des Verfahrens.

Heizgase, entweder von natürlicher oder synthetischer Herkunft, z.B. Naturgas, Raffineriegas und Koksofengas, enthalten Schwefelwasserstoff. Der Schwefelwasserstoff muss entfernt werden, bevor das Gas verbrannt oder als Feed für ein chemisches Verfahren verwendet wird. Schwefelwasserstoff ist sowohl sehr korrosiv als auch hochgiftig. Er wird darum so bald wie möglich aus dem Gas entfernt, aus einem Synthese-Gas z.B. am Herstellungsort, aus saurem Erdgas in der Behandlungsanlage nahe der Gasquelle. Das vom Schwefelwasserstoff befreite Gas wird als entschwefeltes Gas bezeichnet.

Wenn Schwefelwasserstoff in grossen Mengen gegenwärtig ist, wird es üblicherweise durch Absorption in einem Alkali-Lösungsmittel, meistens einem Amin-Lösungsmittel, entfernt. Der Schwefelwasserstoff wird danach durch Erwärmen des Lösungsmittels bei niedrigerem Druck desorbiert. Das aus dem Desorber kommende Gas wird Clausgas genannt und es wird normalerweise in einer Claus-Anlage verarbeitet, in der der Schwefelwasserstoff durch substöchiometrische Verbrennung mit Luft in elementaren Schwefel umgewandelt wird. Es ist allgemeine Praxis mit dem exotherm ablaufenden Clausverfahren Dampf zu erzeugen. Der Dampf wird in einem Desorber verwendet, um das Clausgas von dem Lösungsmittel zu strippen.

Im allgemeinen enthalten alle Heizgase, die Schwefelwasserstoff enthalten, auch Kohlendioxyd. Sehr oft ist das Kohlendioxyd in grösseren Mengen als der Schwefelwasserstoff enthalten. Wenn solche Gase einfach mit einer Alkalilösung gewaschen werden, wird das Kohlendioxyd zusammen mit dem Schwefelwasserstoff absorbiert. Dies wird normalerweise so gewünscht. Obwohl Kohlendioxyd nicht so giftig und weniger korrosiv ist wie Schwefelwasserstoff, es ist ein Ballaststoff, der den Heizwert des Heizgases vermindert. Die Entfernung von Kohlendioxyd hat jedoch einige Nachteile, so dass es in manchen Fällen wünschenswert ist, nur den Schwefelwasserstoff zu absorbieren.

Wenn das Verhältnis von Kohlendioxyd zu Schwefelwasserstoff im Heizgas hoch ist, wird eine vollständige Entfernung von beiden Gasen ein Clausgas liefern, das arm an Schwefelwasserstoff ist. Dies kann zu Schwierigkeiten in der Claus-Anlage führen, denn das als Ballast wirkende Kohlendioxyd vermindert die Heizleistung, und der Betrieb der Anlage ist schwieriger. In extremen Fällen, bei einem Schwefelwasserstoffgehalt im Clausgas von weniger als 10 %, ist der normale Betrieb der Claus-Anlage unmöglich, und spezielle Massnahmen müssen getroffen werden, um den Schwefelwasserstoff in elementaren Schwefel umzuwandeln.

Eine gleichzeitige Absorption des Schwefelwasserstoffs und des Kohlendioxyds weist ausserdem den Nachteil auf, dass zusätzliches Lösungsmittel erforderlich ist. Diese zusätzliche Flüssigkeit muss durch die Absorptionskolonne geführt, erwärmt und im Desorber gestrippt, dann gekühlt und zum Absorber zurückgeführt werden. Der Desorber wird dadurch grösser und erfordert zusätzlichen Dampf, der möglicherweise in einer Claus-Anlage, die ein mageres Clausgas verbrennt, nicht zur Verfügung steht. Ausserdem wird die Claus-Anlage grössere Abmessungen haben. Die Grösse einer solchen Anlage wird stärker bestimmt durch das totale Volumen des behandelten Clausgases als durch die Schwefelproduktionsrate.

In einigen Fällen werden diese Probleme den Vorteil der Entfernung von Kohlendioxyd aus dem Heizgas zunichte machen und eine selektive Technik zur Entfernung des Schwefelwasserstoffs, d.h. ohne dabei das Kohlendioxyd zu entfernen, wird notwendig.

In anderen Fällen mag es unumgänglich sein, den Schwefelwasserstoff und das Kohlendioxyd beide aus dem Heizgas zu entfernen, jedoch ist das resultierende Clausgas zu schwach, um in einer Claus-Anlage verarbeitet werden zu können. Es kann dann eine selektive Absorptionstechnik angewendet werden, um das Clausgas anzureichern. Indem man den Schwefelwasserstoff selektiv aus dem Clausgas entfernt und anschliessend das angereicherte Lösungsmittel strippt, werden zwei Gasströme erzeugt. Das Gas, das den Absorber verlässt, ist entschwefeltes Kohlendioxyd. Dieses Gas kann nach Verbrennung, um die letzten Spuren von Schwefelwasserstoff in Schwefeldioxyd zu verwandeln, einem Hochkamin zugeführt werden. Das Gas, das den Desorber verlässt, ist ein angereichertes Clausgas, das hauptsächlich Schwefelwasserstoff enthält und geeignet ist, in einer einfachen und kompakten Claus-Anlage verarbeitet zu werden. Die Gewinnung eines entschwefelten Kohlendioxydstroms durch dieses Verfahren kann sehr nützlich sein. Im Gegensatz zu dem Gasstrom, der eine Claus-Anlage verlässt, enthält dieser Gasstrom keinen Stickstoff. Ein solcher Gasstrom kann sehr wirksam sein, um die Ausbeute einer Oelquelle zu erhöhen.

Für die Mehrzahl der Verfahren zum Entschwefeln von Gas ist es notwendig, sowohl den Schwefelwasserstoff als auch das Kohlendioxyd zu entfernen, und es werden übliche entschwefelnde Lösungsmittel verwendet, z.B. Amine oder Alkanolamine.

In den vorstehend beschriebenen Fällen, wo Schwefelwasserstoff selektiv absorbiert werden muss, werden spezielle Techniken verwendet. Eine gängige Technik besteht darin, ein physikalisches Lösungsmittel zu verwenden, z.B. Selexol, dies eher als chemische Lösungsmittel, wie MEA, DEA usw. Einige dieser physikalischen Lösungsmittel absorbieren Schwefelwasserstoff vorzugsweise gegenüber Kohlendioxyd. So wird z.B. behauptet, dass Selexol bei gleichem Partialdruck acht mal mehr Schwefelwasserstoff als Kohlendioxyd absorbiert. Der Nachteil dieser Lösungsmittel ist der Absorptionsmechanismus. Die Gleichgewichte physikalischer Absorptionsmittel werden durch eine Temperaturänderung nicht so stark verschoben als dies bei chemischen Absorptionsmitteln der Fall ist. Die Desorption von absorbierten Gasen aus physikalischen Absorptionsmitteln verlangt daher eine grössere Druckreduktion als im Falle von chemischen Absorptionsmitteln. Dies bedeutet, dass für eine gegebene Leistung die effektive Beladbarkeit für physikalische Absorptionsmittel geringer ist als für chemische. Diese Unterschiede sind in der Tabelle 1 aufgeführt. Da das Clausgas bei niedrigerem Druck anfällt, muss es für einen physikalischen Absorptionsprozess verdichtet werden, was hohe Kosten verursacht.

Eine Möglichkeit, den Absorber so zu bemessen, dass die gleichzeitige Absorption von Kohlendioxyd so gering wie möglich ist, ist die Verwendung einer Gruppe von chemischen Lösungsmitteln wie Alkanolaminen, vorzugsweise Methyl-Diethanolamin (MDEA). Da Schwefelwasserstoff rascher als Kohlendioxyd in Alkanolamine absorbiert wird, ist es möglich, die Selektivität durch Vergrösserung der Zirkulationsgeschwindigkeit des Lösungsmittels oder durch Minimierung der Anzahl Böden zu erhöhen, und dadurch die Menge an absorbiertem Kohlendioxyd zu vermindern. Da Alkanolamine zur Gruppe der chemischen Lösungsmittel gehören, ist es möglich, den Absorber und den Desorber bei vergleichbaren Drücken zu betreiben. Diese Technik ist einfach anzuwenden, aber nicht sehr wirkungsvoll. Wenn man die Anzahl der Absorberböden optimiert, mag es möglich sein, einen Trennfaktor von 4 bis 5 zu erreichen, wenn MDEA als Lösungsmittel benutzt wird. Dies bedeutet in der Praxis, dass doch grössere Mengen von Kohlendioxyd mitabsorbiert werden, wenn gewünscht ist, dass das Produktgas nur noch einige ppm von Schwefelwasserstoff enthält.

Einige Erfinder haben spezielle Bodenformen für selektive Absorptionsaufgaben vorgeschlagen. Z.B. offenbaren die US-A-4 278 621 und die US-A-4 297 329 einen neuartigen Siebboden mit einer kleinen perforierten Fläche und folglich hoher Gasgeschwindigkeit. Unglücklicherweise haben solche Böden, obwohl geringfügig besser als konventionelle Siebböden, einen entsprechend höheren Druckabfall. Für abwärts durch die Kolonne strömendes Lösungsmittel ist es deshalb erforderlich, die Böden weiter voneinander entfernt anzuordnen als in einer konventionellen Kolonne. Dieses bedeutet selbstverständlich eine wesentliche Erhöhung der Kosten eines solchen Absorbers bei einer nur geringen Leistungssteigerung.

Die US-A-4 093 701 betrifft ein anderes Verfahren, um Schwefelwasserstoff selektiv zu absorbieren. Eine konventionelle Bodenkolonne ist in eine Anzahl von Zonen aufgeteilt, wobei jede Zone mit frischem Aminlösungsmittel aus dem Desorber gespeist wird. Hier ist eine beträchtliche Anzahl von zusätzlichen Leitungen und Ventilen nötig, um eine geringfügige Verbesserung in der Leistung zu erreichen.

Der Erfindung liegt daher die Aufgabe Zugrunde, ein Verfahren der eingangs definierten Art zu schaffen, das die Nachteile der bekannten Verfahren nicht aufweist. Das heisst, es sollte von den wirksameren chemischen Lösungsmitteln Gebrauch gemacht werden, so dass die Anreicherung von Clausgasen durch Absorption bei geringem Druck ausgeführt werden kann. Es sollte mit diesen Lösungsmitteln eine möglichst hohe Selektivität erreicht werden, um bei weitgehender Absorption von Schwefelwasserstoff die Menge an mitabsorbiertem Kohlendioxyd auf ein Minimum zu beschränken. Es sollte möglich sein, das Verfahren mit kompakten und dadurch billigen Vorrichtungen durchzuführen. Das Verfahren sollte einfach sein und die Anzahl zusätzlicher Leitungen und Ventile ebenfalls auf ein Minimum beschränkt. Diese Aufgabe wird gemäss der Erfindung durch die im Kennzeichen des Anspruchs 1 angegebenen Merkmale gelöst. Die Unteransprüche betreffen vorteilhafte Weiterbildungen.

Die Erfindung benutzt die überraschende Feststellung, dass bei Verwendung einer Absorptionskolonne mit einer im Kennzeichen des Anspruchs 1 definierten, an sich bekannten, geordneten Packung die Absorptionsgeschwindigkeit von Kohlendioxyd in Alkanolaminlösungen sehr viel kleiner ist als man aufgrund von Versuchen mit Absorptionskolonnen mit anderen Packungen erwarten würde. Dies wird anhand von folgenden Beispielen erläutert. In der Tabelle 1 sind die Versuchsresultate für die Absorption von Schwefelwasserstoff und Kohlendioxyd in 2 molarer Methyl-Diethanolamin-Lösung aufgeführt. Es wurden 500 Nm³/h Gas bei 18 bar in einer Absorptionskolonne von 160 mm Durchmesser mit einer Packung aus Pallringen mit 2.5 Nm³/h MDEA Lösung im Gegenstrom kontaktiert. Der Durchmesser der Pallringe betrug 25 mm, die Höhe der Packung 2.5 m.

Tabelle 1

|  | $H_2S$ | $CO_2$ |
|---|---|---|
| Rohgas | 1.5% | 17 % |
| Reingas | 150 ppm | 6.2 % |
| Anzahl Transfereinheiten ($NTU_{OG}$) | 4.6 | 1.0 |

Die Resultate zeigen erwartungsgemäss, dass die Absorption von Kohlendioxyd etwa 4 bis 5 mal langsamer vor sich geht als die Absorption von Schwefelwasserstoff. Immerhin, um eine $H_2S$-Reinheit von 150 ppm zu erreichen wird wegen des höheren $CO_2$-Gehaltes des Rohgases etwa 7 mal mehr Kohlendioxyd absorbiert als Schwefelwasserstoff. Bei Desorption resultiert ein schwaches Clausgas mit 12 % Schwefelwasserstoff.

Versuche mit einer im Kennzeichen des Anspruchs 1 definierten, geordneten Packung haben völlig unerwartete Resultate ergeben. Unter geordneter Packung ist hier eine Packung zu verstehen, die aus einer Anzahl aufeinander gestapelter Packungsmodulen aufgebaut ist, die aus gewellten, parallel zur Kolonnenachse gestellten Platten bestehen, deren Wellenrichtung zur Kolonnenachse geneigt ist und bei benachbarten Platten entgegengesetzt verläuft. Der Neigungswinkel liegt vorteilhaft zwischen 20° und 70°.

Uebereinander liegende Packungsmodule sind gegeneinander verdreht. Die CH-C-398 503 zeigt eine solche Packung. Die Wellenflanken können ihrerseits eine Wellung viel kleinerer Wellenlänge aufweisen wie dies in der CH-C-617 357 gezeigt ist. Die Bezeichnung gewellt schliesst hier andere, ebenfalls gebrauchte Bezeichnungen wie geriffelt, gezahnt u.a. ein. Andere Packungen, z.B. Ringe, seien sie geordnet oder ungeordnet eingebaut, kommen für die Erfindung nicht in Betracht. Solche Packungen bringen nicht die gewünschte Selektivität. Vermutlich liegt der Nachteil solcher Packungen darin, dass der Flüssigkeitsfilm an den Berührungsstellen der einzelnen Elemente, z.B. Ringen, abgebrochen wird, wodurch die Absorption von Kohlendioxyd begünstigt wird. Absorptionskolonnen mit Siebböden sind ebenfalls ausgeschlossen. Die Packung muss eine kontinuierliche Rieselfläche für die Flüssigkeit bereit stellen. Die Packung kann aus verschiedenen Werkstoffen bestehen, z.B. Blechen, Kunststoffen, Geweben und gewirkten Stoffen. Nicht verwendbar ist Vlies, da der Flüssigkeitsfilm daran auch abbricht.

Es ist bekannt, dass solche Packungen im allgemeinen effizienter als ungeordnete Pallringe absorbieren. Deswegen, um ähnliche Trennleistungen zu erreichen, wurde nur eine 1.54 m hohe Packung in die Kolonne eingebaut. Bei sonst gleichen Bedingungen wie für die Packung aus Pallringe waren die Resultate wie in Tabelle 2 aufgeführt.

Tabelle 2

|  | $H_2S$ | $CO_2$ |
|---|---|---|
| Rohgas | 1.5% | 17% |
| Reingas | 108 ppm | 10.5% |
| Anzahl Transfereinheiten ($NTU_{OG}$) | 4.9 | 0.48 |

Ueberraschend ist die Feststellung, dass gegenüber dem ersten Versuch, trotz besserer $H_2S$-Absorption, nur etwa halb so viel $CO_2$ absorbiert wurde. Die errechnete Anzahl Transfereinheiten zeigt, dass die $CO_2$-Absorption etwa 10 mal langsamer verläuft als die $H_2S$-Absorption. Bei der Desorption des beladenen Absorptionsmittels würde man ein Clausgas mit 20 % $H_2S$ erhalten.

Aehnliche Unterschiede hat man bei Gleichstrombetrieb der Kolonne festgestellt. Mit der geordneten Packung verläuft die $CO_2$-Absorption auch etwa 10 mal langsamer als die Absorption von $H_2S$. Für Pallringe aber blieb der Unterschied beim Verhältnis 4 bis 5.

Mit Gleichstromabsorption allein kann man Schwefelwasserstoff nicht bis auf ppm-Niveau aus dem Rohgas entfernen. Trotzdem ist der Gleichstrombetrieb sehr nützlich, um grössere Mengen $H_2S$ selektiv zu absorbieren, weil man bei der Auswahl der Betriebsparameter nicht durch die Flutgrenze limitiert ist. Durch höhere Durchflussraten ist es möglich, allgemein höhere Stoffübergangskoeffizienten zu erreichen und dadurch mit einer dünneren und kürzeren Kolonne zu arbeiten.

Man kann aber auch von den Vorteilen von beiden Durchströmungsweisen Gebrauch machen, um eine grössere Menge $H_2S$ bis auf ppm-Niveau aus einem Speisegas selektiv gegenüber $CO_2$ zu entfernen.

EP 0 204 847 B2

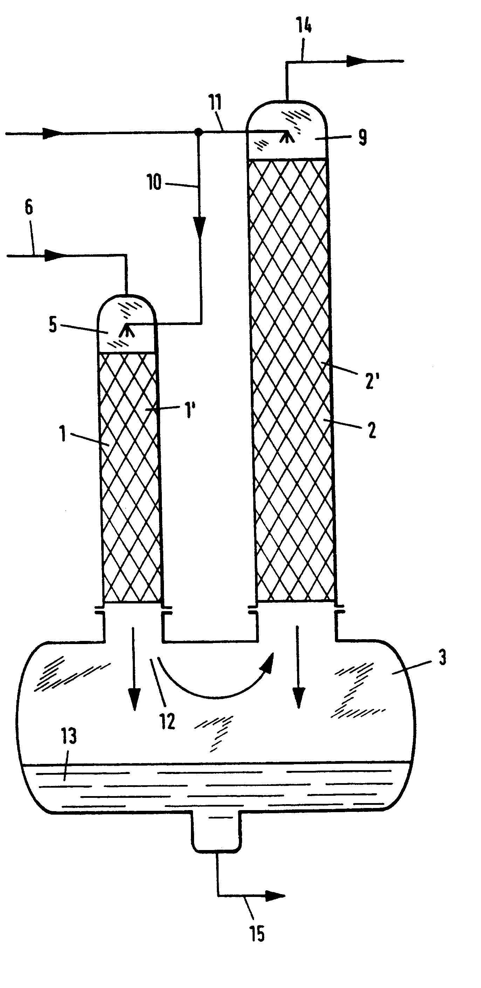

Für diese Aufgabe ist nachstehend ein Ausführungsbeispiel anhand der Zeichnung, die eine Vorrichtung zum Durchführen des Verfahrens zeigt, beschrieben.

Die Vorrichtung zum Durchführen des Verfahrens weist eine vertikale Absorptionskolonne 1 auf, die im Gleichstrom betrieben wird, und eine vertikale Absorptionskolonne 2, die im Gegenstrom betrieben wird. Beide Absorber 1 und 2 sind auf einem Gefäss 3 befestigt. Der Absorber 1 hat einen kleineren Querschnitt als der Absorber 2, so dass die Gasgeschwindigkeit hoch ist, was den Absorptionsvorgang begünstigt. Der Absorber 1 wird am Kopf 5 aus einer Leitung 6 mit zu reinigendem Gas, z.B. Erdgas, das Schwefelwasserstoff und Kohlendioxyd enthält, gespeist. Beiden Absorbern 1 und 2 wird am Kopf 5 bzw. 9 über eine Leitung 10 bzw. 11 eine wässrige Lösung eines Alkanolamins, vorzugsweise Methyl-Diethanolamin (MDEA), das als Absorptionsmittel für den Schwefelwasserstoff dient, eingespeist. Beide Absorber 1 und 2 enthalten eine oben definierte, geordnete Packung.

Nach Durchlaufen des Absorbers 1 trennen sich die mit Schwefelwasserstoff angereicherte Absorptionsflüssigkeit und das Gas bei 12 im Gefäss 3. Die Absorptionsflüssigkeit sammelt sich am Boden des Gefässes in einem Sumpf 13. Sie kann über eine Leitung 15 abgezogen und rezirkuliert werden. Das Gas, das wesentlich an Schwefelwasserstoff abgereichert ist, wird im Absorber 2 im Gegenstrom zur abwärts fliessenden Absorptionsflüssigkeit geführt, die den Schwefelwasserstoffrest aus dem Gas entfernt. Die damit beladene Absorptionsflüssigkeit fliesst ebenfalls zum Sumpf 13. Das von Schwefelwasserstoff gereinigte Gas, das einen Grossteil des ursprünglichen Kohlendioxyds noch enthält, wird über eine Leitung 14 abgeführt.

Eine Abwandlung der beschriebenen Vorrichtung ermöglicht eine noch wirtschaftlichere Betriebsweise. Werden beide Kolonnen nämlich mit einem eigenen Sumpfgefäss versehen, und das beladene Absorptionsmittel aus dem Sumpf im Gegenstromabsorber 2 in den Gleichstromabsorber 1 eingepumpt, so ist mit einer Reduktion der Menge bzw. einer Erhöhung der Beladung des Absorptionsmittels zu rechnen.

Die Betriebsweise ist bestimmt durch die Erfordernisse, die an die Qualität der Trennung gestellt werden. Beim Gegenstromverfahren wird eine bessere Schwefelwasserstoffentfernung erreicht falls ein begrenztes Volumen von Alkanolamin zur Verfügung steht, d.h. wenn die Kosten der Regeneration von Alkanolamin ins Gewicht fallen. Beim Gleichstromverfahren ist der eigentliche Stoffaustausch schneller, jedoch erschwert diese Strömungsführung die vollständige Entfernung des Schwefelwasserstoffs.

Bei der beschriebenen Vorrichtung mit zwei Absorbern wird von den Vorteilen beider Durchströmungsweisen Gebrauch gemacht.

**Patentansprüche**

**1.** Verfahren zur selektiven Absorption von Schwefelwasserstoff aus einem Schwefelwasserstoff und Kohlendioxyd enthaltenden Gas in einer Absorptionskolonne, in der das Gas mit einem eine wässrige Alkanolaminlösung enthaltenden Absorptionsmittel in Kontakt gebracht wird, dadurch gekennzeichnet, dass die Absorption in mindestens zwei Absorptionskolonnen mit geordneten Packungen durchgeführt wird, die aus gewellten Platten bestehen, die parallel zur Kolonnenachse angeordnet sind, und deren Wellung unter einem Winkel zwischen 20° und 70° zur Kolonnenachse geneigt und bei benachbarten Platten entgegengesetzt gerichtet ist und dass,

a. in der zu erst durchströmten Kolonne Gas und Absorptionsmittel im Gleichstrom fliessen und der Kolonnenquerschnitt A so gewählt wird, daß die Gasgeschwindigkeit W zwischen 3 und 30 m/s liegt, wobei

$$W = \frac{V}{A} \text{ m/s}$$

$V =$ Gasdurchsatz, $m^3/s$
$A =$ Kolonnenquerschnitt, $m^2$

und die Plattenform und deren Einbau so gewählt wird, dass der Faktor R zwischen 0,3 und 5 liegt, wobei

$$R = \frac{L}{A \cdot F}$$

$L =$ Absorptionsmitteldurchsatz, $m^3/H$

5

F = Rieselfläche pro Volumeneinheit der Packung, m²/m³
A = Kolonnenquerschnitt, m²

b. in der zweiten Kolonne Gas und Absorptionsmittel im Gegenstrom fliessen und der Kolonnenquerschnitt A so gewählt wird, dass die Gasbelastung G zwischen 0,3 und 4 liegt, wobei

$$G = \frac{V}{A} \sqrt{\rho}$$

V = Gasdurchsatz, m³/s
A = Kolonnenquerschnitt, m²
ρ = Gasdichte, kg/m³

und die Plattenform und deren Einbau so gewählt wird, dass der Faktor R zwischen 0,02 und 0,4 liegt, wobei

$$R = \frac{L}{A \cdot F}$$

L = Absorptionsmitteldurchsatz, m³/h
F = Rieselfläche pro Volumeneinheit der Packung, m²/m³
A = Kolonnenquerschnitt, m²

**2.** Verfahren nach Anspruch 1, dadurch gekennzeichnet, dass das Alkanolamin Methyl-Diethanolamin ist, vorzugsweise im Konzentrationsbereich von 8 bis 40 Gewichtsprozenten.

**3.** Verfahren nach Anspruch 1 oder 2, dadurch gekennzeichnet, dass das Gas ein saures Erdgas ist mit einem Druck zwischen 20 und 100 bar.

**4.** Verfahren nach einem der Ansprüche 1 bis 3, dadurch gekennzeichnet, dass das Gas ein Clausgas ist mit einem Druck zwischen 1 und 2 bar.

**5.** Vorrichtung zum Durchführen des Verfahrens nach Anspruch 1, gekennzeichnet durch zwei Absorptionskolonnen, die über den Gasraum eines Sumpfgefässes miteinander in Serie verbunden sind, wobei beide Absorptionskolonnen eine geordnete Packung aufweisen, die aus gewellten Platten besteht, die parallel zur Kolonnenachse angeordnet sind, und deren Wellung unter einem Winkel zwischen 20° und 70° zur Kolonnenachse geneigt und bei benachbarten Platten entgegengesetzt gerichtet ist, und dass die Flanken der gewellten Platten eine Wellung kürzerer Wellenlänge aufweisen als die übrigen Bereiche.

**6.** Vorrichtung nach Anspruch 5, dadurch gekennzeichnet, dass die Absorptionskolonne, in die das Gas als erste eingeleitet wird, im Gleichstrom, die andere Absorptionskolonne im Gegenstrom geschaltet ist.

**Claims**

**1.** A process for the selective absorption of hydrogen sulphide from a gas containing hydrogen sulphide and carbon dioxide, in an absorption column in which the gas is brought into contact with an absorption agent containing an aqueous alkanol amine solution, characterised in that the absorption is carried out in at least two absorption columns having regular packings consisting of corrugated plates disposed parallel to the column axis and the corrugation of which extends at an angle of between 20° and 70° to the column axis and in opposite directions at adjacent plates, and in that:

a. in the first column subjected to the flow the gas and absorption agent flow in co-current, and the column cross-section A is so selected that the gas speed W is between 3 and 30 m/s, where W = V/A m/s

V = gas throughput, m³/S
A = column cross-section, m²

and the shape of the plates and their installation are so selected that the factor R is between 0.3 and 5, where

$$R = L / A \cdot F$$

L = absorption agent throughout, $m^3/h$
F = trickle area per unit volume of packing, $m^2/m^3$
A = column cross-section, $m^2$

b. in the second column the gas and absorption agent flow in countercurrent and the column cross-section A is so selected that the gas loading G is between 0.3 and 4, where

$$G = V/A \sqrt{\rho}$$

V = gas throughput, $m^3/s$
A = column cross-section, $m^2$
$\rho$ = gas density, $kg/m^3$

and the shape of the plates and their installation are so selected that the factor R is between 0.02 and 0.4, where

$$R = L / A \cdot F$$

L = absorption agent throughout, $m^3/h$
F = trickle area per unit volume of packing, $m^2/m^3$
A = column cross-section, $m^2$.

2. A process according to claim 1, characterised in that the alkanol amine is methyl-diethanaol amine, preferably in the concentration range of from 8 to 40% by weight.

3. A process according to claim 1 or 2, characterised in that the gas is an acid natural gas having a pressure of between 20 and 100 bar.

4. A process according to any one of claims 1 to 3, characterised in that the gas is a Claus gas having a pressure of between 1 and 2 bar.

5. Apparatus for performing the process according to claim 1, characterised by two absorption columns interconnected in series via the gas space of a sump vessel, the two absorption columns having a regular packing consisting of corrugated plates disposed parallel to the column axis and the corrugation of which is inclined at an angle of between 20° and 70° to the column axis and extends in opposite directions at adjacent plates, and in that the flanks of the corrugated plates have a corrugation of shorter wave-lengths than the other zones.

6. Apparatus according to claim 5, characterised in that the absorption column into which the gas is first introduced is arranged for co-current flow while the other absorption column is arranged for countercurrent flow.

## Revendications

1. Procédé d'absorption sélective d'hydrogène sulfuré d'un gaz contenant de l'hydrogène sulfuré et du dioxyde de carbone, dans une colonne d'absorption dans laquelle le gaz est mis en contact avec un agent d'absorption contenant une solution aqueuse d'alcanolamine, caractérisé en ce que l'absorption s'effectue dans au moins deux colonnes d'absorption contenant des garnitures ordonnées qui sont constituées de plaques ondulées disposées parallèlement à l'axe de la colonne et dont l'ondulation est inclinée d'un angle compris entre 20° et 70° par rapport à l'axe de la colonne et orientée en sens contraire pour les plaques adjacentes, et en ce que

a. le gaz et l'agent d'absorption s'écoulent en courant parallèle dans la colonne traversée en premier, et la section transversale A de la colonne est choisie de manière que la vitesse W du gaz se situe entre 3 et 30 m/s, avec

W = $\frac{V}{A}$ m/s

V =      débit du gaz, $m^3/s$
A =      section transversale de la colonne, $m^2$

et la forme des plaques et leur montage sont tels que le facteur R se situe entre 0,3 et 5, avec

$$R = \frac{L}{A \cdot F}$$

L =      débit de l'agent d'absorption, $m^3/h$
F =      surface de ruissellement par unité de volume de la garniture, $m^2/m^3$
A =      section transversale de la colonne, $m^2$

b. le gaz et l'agent d'absorption circulent à contre-courant dans la seconde colonne, et la section transversale A de la colonne est choisie de manière que la charge du gaz G se situe entre 0,3 et 4, avec

G = $\frac{V}{A} \sqrt{\rho}$

V =      débit du gaz, $m^3/s$
A =      section transversale de la colonne, $m^2$
$\rho$ =      masse volumique du gaz, $kg/m^3$

et la forme des plaques et leur montage sont tels que le facteur R se situe entre 0,02 et 0,4, avec

$$R = \frac{L}{A \cdot F}$$

L =      débit de l'agent d'absorption, $m^3/h$
F =      surface de ruissellement par unité de volume de la garniture, $m^2/m^3$
A =      section transversale de la colonne, $m^2$

**2.** Procédé selon la revendication 1, caractérisé en ce que l'alcanolamine est de la méthyldiéthanolamine, de préférence dans une plage de concentrations comprise entre 8 et 40 % en poids.

**3.** Procédé selon la revendication 1 ou 2, caractérisé en ce que le gaz est un gaz naturel acide à une pression comprise entre 20 et 100 bars.

**4.** Procédé selon l'une des revendications 1 à 3, caractérisé en ce que le gaz est un gaz de Claus à une pression comprise entre 1 et 2 bars.

**5.** Dispositif pour la mise en oeuvre du procédé selon la revendication 1, caractérisé par deux colonnes d'absorption qui sont reliées entre elles en série, par l'espace rempli de gaz d'un collecteur, les deux colonnes d'absorption comportant une garniture ordonnée qui est constituée de plaques ondulées disposées parallèlement à l'axe de la colonne et dont l'ondulation est inclinée d'un angle compris entre 20° et 70° par rapport à l'axe de la colonne et orientée en sens contraire pour les plaques adjacentes, et en ce que les flancs des plaques ondulées présentent une ondulation de longueur d'onde plus courte que les autres zones.

**6.** Dispositif selon la revendication 5, caractérisé en ce que la colonne d'absorption, dans laquelle le gaz est introduit en premier, fonctionne en courant parallèle, tandis que l'autre colonne d'absorption fonctionne à contre-courant.